# DEMANDE DE BREVET EUROPEEN

(11) **EP 2 207 150 A1**
(43) Date de publication de la demande: **14.07.2010**
(21) Numéro de dépôt: 09180247.0
(22) Date de dépôt: 21.12.2009
(51) Int. Cl.: G07F 7/08, G07F 7/10, G06Q 20/00

(54) **Procédé d'aide au contrôle d'enregistrements de transactions, dispositif de transaction, serveur, terminal mobile et programmes d'ordinateur correspondants**

(30) Priorité: 22.12.2008 FR 0858966
(71) Demandeur: Compagnie Industrielle et Financière d'Ingénierie "Ingenico", 92200 Neuilly sur Seine (FR)
(72) Inventeur: Naccache, David, 75018 Paris (FR)
(74) Mandataire: Bioret, Ludovic

(57) **Abrégé**

L'invention concerne un procédé d'aide au contrôle de l'exactitude d'enregistrements de transactions bancaires éditées dans un relevé bancaire et effectuées par l'intermédiaire d'au moins un dispositif de transaction.

Selon l'invention, un tel procédé comprend, pour au moins une desdites transactions, les étapes suivantes :
- émission, par ledit dispositif de transaction, d'au moins un premier signal comprenant un message relatif à ladite transaction ;
- réception, par au moins un terminal mobile, dudit au moins un premier signal ;
- transmission, par ledit terminal mobile, d'un second signal comprenant au moins ledit message, vers au moins un organisme bancaire ;
- association, par un serveur de l'organisme bancaire en charge de la transaction, dudit message à au moins une donnée relative à ladite transaction, et marquage de ladite transaction comme transaction pré-contrôlée.

## Description

### 1. Domaine de l'invention

Le domaine de l'invention est celui des transactions effectuées par l'intermédiaire d'un dispositif de transaction, par exemple un terminal de paiement électronique ou un distributeur automatique de billets.

Plus précisément, l'invention concerne la génération des relevés bancaires représentatifs de ces transactions, et plus particulièrement la mise en oeuvre de moyens pour l'aide au contrôle de l'exactitude des données figurant sur ces relevés.

### 2. Art antérieur

Certains organismes, tels que les organismes bancaires, par exemple, ou des grands magasins gérant des comptes clients, peuvent délivrer à leurs clients différents relevés, et notamment des relevés en version informatique ou des relevés en version papier.

De façon générale, un relevé bancaire présente un certain nombre d'informations relatives aux transactions effectuées par le client, présentées communément sous la forme de lignes, représentatives chacune d'une transaction particulière.

Un inconvénient de cette technique de l'art antérieur tient au fait que les relevés peuvent contenir un très grand nombre d'informations, fastidieuses à contrôler pour le client lorsqu'il souhaite en vérifier l'exactitude. Ainsi, pour un relevé présentant classiquement toutes les transactions effectuées au cours d'un mois, le client peut passer beaucoup de temps à en vérifier le contenu.

### 3. Objectifs de l'invention

L'invention a notamment pour objectif de pallier ces inconvénients de l'art antérieur.

Plus précisément, un objectif de l'invention, selon au moins un mode de réalisation, est de fournir une technique permettant de faciliter le contrôle d'un relevé bancaire pour un client qui souhaite vérifier l'exactitude des données du relevé.

Notamment, l'invention a pour objectif de fournir une telle technique qui ne nécessite pas d'opération ni de manipulation supplémentaire de la part de l'utilisateur, notamment lors de la transaction.

Un autre objectif de l'invention est de fournir une telle technique, qui ne soit ni contraignante, ni impérative pour la validation d'une transaction.

### 4. Exposé de l'invention

L'invention propose une solution nouvelle qui ne présente pas l'ensemble de ces inconvénients de l'art antérieur, sous la forme d'un procédé d'aide au contrôle de l'exactitude d'enregistrements de transactions bancaires éditées dans un relevé bancaire et effectuées par l'intermédiaire d'au moins un dispositif de transaction.

Selon l'invention, un tel procédé comprend, pour au moins une desdites transactions, les étapes suivantes :
- émission, par ledit dispositif de transaction, d'au moins un premier signal comprenant un message relatif à ladite transaction ;
- réception, par au moins un terminal mobile, dudit au moins un premier signal ;
- transmission, par ledit terminal mobile, d'un second signal comprenant au moins ledit message, vers au moins un organisme bancaire ;
- association, par un serveur de l'organisme bancaire en charge de la transaction, dudit message à au moins une donnée relative à ladite transaction, et marquage de ladite transaction comme transaction pré-contrôlée.

Ainsi, l'invention repose sur une approche nouvelle et inventive de l'aide au contrôle de relevés bancaires, qui utilise la proximité d'un terminal mobile de l'utilisateur impliqué dans une transaction pour pouvoir marquer cette transaction comme une transaction de confiance, ou pré-contrôlée. Ce marquage permet ensuite, au niveau de l'organisme bancaire en charge de la gestion des transactions, de traiter différemment les transactions pré-contrôlées et les transactions non pré-contrôlées, de façon à les éditer différemment dans un relevé bancaire.

Selon un mode de réalisation de l'invention, une communication est mise en oeuvre entre un dispositif de transaction, par exemple un terminal de paiement électronique ou un distributeur automatique de billets, et un terminal mobile, par exemple un téléphone mobile ou un « PDA » (« Personal Digital Assistant » pour assistant personnel ou ordinateur de poche), porté par l'utilisateur impliqué dans la transaction.

Ensuite, le terminal mobile transmet les informations reçues du dispositif de transaction à l'organisme ou les organismes bancaires avec lesquels il est « couplé » pour la mise en oeuvre de l'invention.

Par exemple, une application, préalablement installée sur le téléphone mobile d'un utilisateur, permet de transférer un message porté par un signal reçu en provenance d'un dispositif de transaction vers l'organisme bancaire en charge de la gestion du compte bancaire de l'utilisateur porteur du téléphone mobile.

Le procédé d'aide au contrôle selon l'invention consiste donc en un traitement de la transaction parallèle à celui, classique, de l'enregistrement de la transaction, indépendant et facultatif de celui-ci.

Selon une caractéristique particulière de l'invention, le procédé d'aide au contrôle comprend une étape de génération d'un relevé bancaire par un serveur dudit organisme bancaire, mettant en oeuvre un traitement différent pour les transactions marquées pré-contrôlées et pour les transactions non marquées.

Ainsi, le marquage des transactions comme pré-contrôlées permet au serveur de l'organisme bancaire en charge de ces transactions de les traiter de manière différente des transactions non pré-contrôlées, de façon à pouvoir les éditer également de manière différente sur un relevé bancaire.

Le contrôle d'un relevé bancaire par un utilisateur, pour en vérifier l'exactitude, est ainsi facilité par un marquage particulier des transactions ayant été pré-contrôlées par le procédé selon l'invention. L'utilisateur peut ainsi gagner du temps en ne vérifiant que les transactions apparaissant comme non pré-contrôlées sur son relevé.

Classiquement, une transaction correspond à une ligne de relevé, et comprend notamment des informations concernant le montant de la transaction, la date de la transaction, et un libellé de transaction.

Par exemple, le relevé bancaire selon un mode de réalisation de l'invention peut être découpé en deux parties distinctes, la première présentant les transactions pré-contrôlées et la seconde les transactions non pré-contrôlées. Ainsi, dans le cas d'un relevé bancaire informatique, l'utilisateur peut par exemple choisir de ne pas afficher la première partie du relevé, et dans le cas d'un relevé en version papier, l'utilisateur peut par exemple demander à son organisme bancaire de ne pas imprimer cette premier partie du relevé.

Le relevé bancaire peut également regrouper les transactions pré-contrôlées à la fin du relevé, de manière à ce que l'utilisateur les identifie facilement dans son contrôle du relevé.

Dans un autre exemple, le relevé bancaire peut présenter des éléments de marquage de ces transactions pré-contrôlées, par exemple une couleur de texte différente, une police de caractères différente, l'utilisation de caractères en italique ou en gras, une colonne supplémentaire présentant un indicateur de pré-contrôle, etc.

Selon un mode de réalisation de l'invention, ledit message relatif à ladite transaction comprend des informations chiffrées relatives à ladite transaction et/ou à une carte électronique utilisée pour ladite transaction.

De cette manière, le message relatif à la transaction peut être décodé et associé à la transaction en question, et à la carte électronique impliquée dans la transaction. Ces informations sont en effet nécessaires pour reconnaître par exemple le porteur de la carte et donc son compte bancaire, afin de pouvoir utiliser ensuite les informations de marquage des transaction.

Par exemple, ces informations permettent à l'organisme bancaire ayant reçu le message de savoir à quel client elles se réfèrent.

En particulier, ledit premier signal est transmis selon une technique de communication appartenant au groupe comprenant :
- la technologie « Bluetooth » ;
- la technologie « Wi-Fi » ;
- la technologie « RFID » ;
- la technologie « NFC » (« Near Field Communication » en anglais, pour « communication en champ proche ») ;
- la technologie infrarouge.

Ainsi, selon différents modes de réalisation de l'invention, la communication entre le dispositif de transaction et le terminal mobile est mise en oeuvre via différentes technologies, variant par exemple selon le type de terminal mobile impliqué.

Selon une caractéristique particulière de l'invention, ledit premier signal est émis vers tous les terminaux mobiles voisins dudit dispositif de transaction.

Ainsi, lorsqu'une transaction est effectuée par un client, le dispositif de transaction impliqué génère un premier signal et le diffuse vers tous les terminaux mobiles qui se trouvent à proximité.

Selon ce mode de réalisation, le dispositif de transaction n'adresse pas son signal à un terminal mobile en particulier, mais le diffuse de façon à ce que tous les terminaux mobiles voisins puissent le recevoir. Ce mode de réalisation permet au dispositif de transaction de générer son signal sans se préoccuper du ou des destinataires.

Par exemple, si le dispositif de transaction communique via une technologie « Bluetooth », tous les téléphones portables et ordinateurs de poche se trouvant à une distance permettant de recevoir un tel signal vont recevoir ce premier signal en provenance du dispositif de transaction.

Selon les différents modes de réalisation décrits par la suite, ce signal reçu par tous les terminaux mobiles voisins du dispositif de transaction est traité différemment.

Selon un mode de réalisation de l'invention, ladite étape de transmission d'un second signal, vers au moins un organisme bancaire, est mise en oeuvre par chacun desdits terminaux mobiles ayant reçu ledit premier signal.

Ainsi, les terminaux mobiles ayant reçu un signal en provenance du dispositif de transaction transfèrent le message porté par ce signal à l'organisme ou les organismes bancaires avec lesquels ils sont « couplés ».

Ce mode de réalisation de l'invention ne nécessite pas de traitement du message par les terminaux mobiles l'ayant reçu. Ainsi, les terminaux mobiles transfèrent systématiquement le message, sans en connaître le contenu et sans savoir si la transaction concerne effectivement l'organisme bancaire vers lequel ils transfèrent le message.

Le traitement du message est fait ultérieurement par les organismes bancaires ayant reçu le message. Ainsi, chaque organisme bancaire ayant reçu un message en provenance d'un terminal mobile le décode afin d'en extraire les informations relatives à la transaction et à la carte électronique impliquée dans cette transaction. De cette manière, le compte bancaire associé à la carte peut être identifié, et l'organisme bancaire peut savoir s'il est en charge ou non de la gestion de ce compte.

Si c'est le cas, l'organisme bancaire, via un serveur, met en oeuvre l'étape d'association du message à au moins une donnée relative à la transaction, et le marquage de la transaction comme transaction pré-contrôlée, sinon, l'organisme bancaire arrête le traitement du message.

Selon un aspect particulier de l'invention, le procédé d'aide au contrôle comprend, pour chacun des terminaux mobiles ayant reçu ledit premier signal, une étape de validation dudit message relatif à ladite transaction, et ladite étape de transmission d'un second signal, vers au moins un organisme bancaire, est mise en oeuvre seulement par un terminal mobile ayant validé ledit message.

Ainsi, selon ce mode de réalisation, chaque terminal mobile ayant reçu un signal en provenance du dispositif de transaction vérifie si le message reçu le concerne, c'est-à-dire si la transaction a été effectuée via une carte électronique appartenant au porteur du terminal mobile. Si c'est le cas, le terminal mobile transfère le message vers l'organisme bancaire concerné, sinon, le message est ignoré par le terminal mobile.

Là encore, les informations contenues dans le message permettent à l'application dans le téléphone mobile d'identifier la carte électronique impliquée dans la transaction, et de reconnaître si cette carte est liée au porteur du téléphone mobile.

De cette manière, le message porté par le signal émis par le dispositif de transaction n'est pas transféré systématiquement à tous les organismes bancaires associés à tous les téléphones ayant reçu le signal, mais uniquement à l'organisme bancaire en charge de la transaction.

Selon un mode de réalisation de l'invention, le procédé d'aide au contrôle comprend une étape préalable d'émission, par un terminal mobile associé à une carte électronique utilisée pour ladite transaction, d'au moins une information d'identification, vers ledit dispositif de transaction, et ledit premier signal est émis seulement vers ledit terminal mobile.

Ainsi, selon ce mode de réalisation, le dispositif de transaction ne diffuse pas un signal à destination de tous les terminaux mobiles voisins, mais transmet le signal uniquement à destination d'un téléphone mobile, préalablement identifié, concerné par la transaction.

Par exemple, le terminal mobile associé à la carte électronique impliquée dans la transaction émet, vers le dispositif de transaction, un signal portant des informations d'identification de la ou des cartes électroniques auxquelles il est associé. Ensuite, lorsqu'une de ces cartes est impliquée dans une transaction, le dispositif de transaction connaît le terminal mobile vers qui il doit émettre son premier signal portant le message relatif à la transaction.

L'invention concerne également un dispositif de transaction apte à réaliser une transaction bancaire, comprenant des moyens d'émission d'un signal comprenant un message relatif à ladite transaction vers au moins un terminal mobile voisin.

Selon l'invention, le dispositif de comprend des moyens de réception d'au moins une information d'identification en provenance d'au moins un terminal mobile voisin.

Un tel dispositif est notamment apte à mettre en peu les étapes du procédé d'aide au contrôle décrit précédemment, et est par exemple un terminal de paiement électronique ou un distributeur automatique de billets.

Un autre aspect de l'invention concerne un serveur bancaire, comprenant :
- des moyens de réception d'un signal comprenant au moins un message relatif à une transaction ;
- des moyens de traitement dudit message ;
- des moyens d'association dudit message à au moins une donnée relative à une transaction, et des moyens de marquage de ladite transaction comme transaction pré-contrôlée ;
- des moyens de génération d'au moins un relevé bancaire mettant en oeuvre un traitement différent pour les transactions marquées pré-contrôlées et pour les transactions non marquées.

L'invention concerne encore un terminal mobile comprenant:
- des moyens de réception d'au moins un premier signal comprenant un message relatif à une transaction, émis par un dispositif de transaction traitant ladite transaction ;
- des moyens de transmission, d'un second signal comprenant au moins ledit message, vers au moins un organisme bancaire ;
de façon à permettre l'association, par un serveur de l'organisme bancaire en charge de la transaction, dudit message à au moins une donnée relative à ladite transaction, et marquage de ladite transaction comme transaction pré-contrôlée.

Un tel terminal selon l'invention comprend des moyens de validation d'un message relatif à une transaction porté par ledit signal, lesdits moyens de validation étant mis en oeuvre préalablement auxdits moyens de transmission, d'un second signal comprenant au moins ledit message, vers au moins un organisme bancaire.

L'invention concerne également un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé d'aide au contrôle tel que décrit précédemment, lorsqu'il est exécuté sur un dispositif de transaction.

L'invention concerne encore un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé d'aide au contrôle tel que décrit précédemment, lorsqu'il est exécuté sur un terminal mobile.

Un autre aspect de l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé d'aide au contrôle tel que décrit précédemment, lorsqu'il est exécuté sur un serveur bancaire.

Enfin, l'invention concerne un signal représentatif d'un relevé émis par un serveur bancaire, comprenant au moins un indicateur permettant de distinguer les transactions marquées pré-contrôlées selon le procédé d'aide au contrôle décrit précédemment et les transactions non marquées.

### 5. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- les figures 1a, 1b et 1c présentent des exemples de système pour la mise en oeuvre du procédé d'aide au contrôle selon des modes de réalisation de l'invention ;
- les figures 2a, 2b et 2c illustrent les principales étapes du procédé selon des modes de réalisation de l'invention, mise en oeuvre dans des systèmes tel qu'illustrés en figures 1a, 1b ou 1c ;
- la figure 3 présente les différents échanges relatifs à la transaction et au pré-contrôle selon un mode de réalisation de l'invention.

### 6. Description d'un mode de réalisation de l'invention

### 6.1 principe général

Le principe général de l'invention repose sur l'utilisation d'un terminal mobile du client pour transmettre un message, par exemple un reçu, relatif à une transaction, émis par le dispositif de transaction (terminal de paiement électronique ou distributeur automatique de billets) effectuant la transaction, vers l'organisme bancaire du client.

Ce reçu permet ensuite à l'organisme bancaire de marquer la transaction comme une transaction de confiance, ou pré-contrôlée, et d'effectuer une classification des transactions du client, selon qu'elles sont marquées pré-contrôlées ou non.

Cette classification permet ensuite une présentation différente de ces transactions marquées pré-contrôlées sur un relevé bancaire, afin de faciliter le contrôle de son relevé par le client.

Lors de la génération d'un relevé bancaire par un serveur d'un organisme bancaire, plusieurs options de présentation peuvent être choisies pour différencier les transactions marquées comme pré-contrôlées de celles non marquées.

Par exemple, les transactions marquées comme pré-contrôlées peuvent être regroupées, à la fin du relevé bancaire, ou dans une annexe de ce relevé. Ainsi, l'utilisateur qui contrôle l'exactitude des données du relevé peut gagner du temps en ne vérifiant pas les transactions marquées comme pré-contrôlées.

Dans un autre exemple, les transactions marquées comme pré-contrôlées peuvent apparaître dans une couleur différente de celle des transactions non marquées, de façon à les mettre en évidence au fur et à mesure du relevé. L'utilisation d'une police différente ou de caractères italiques ou gras peut également être choisie pour différencier les transactions marquées comme pré-contrôlées des transactions non marquées.

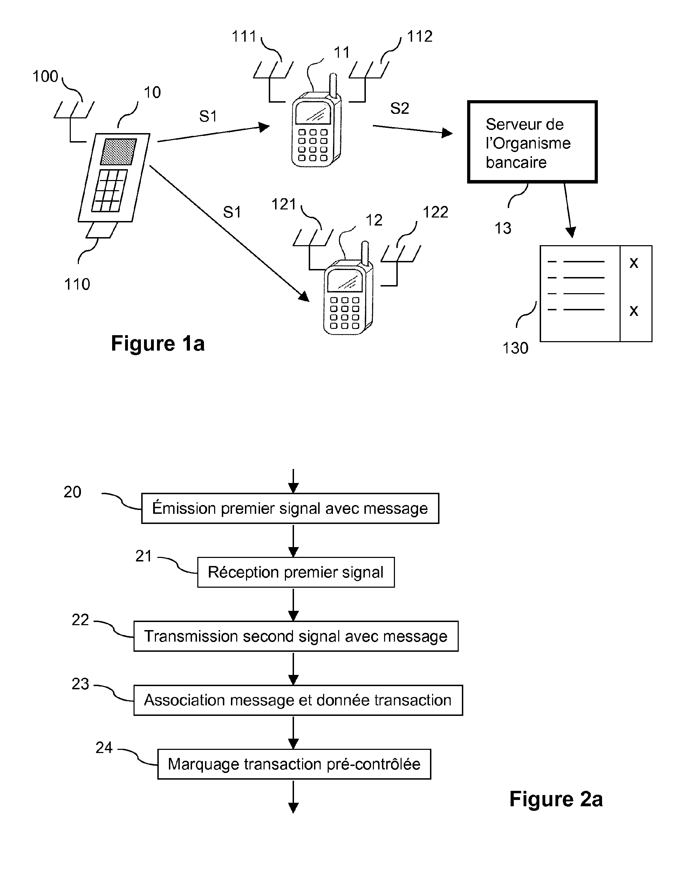

Les transactions marquées comme pré-contrôlées peuvent encore être identifiées par un indicateur (une croix par exemple) dans une colonne supplémentaire ajoutée à chaque ligne du relevé, comme illustré pour un relevé 130 sur la figure 1a.

L'utilisateur peut ainsi identifier rapidement les transactions ayant été pré-contrôlées, parmi toutes les transactions éditées dans son relevé.

### 6.2 Description d'un premier mode de réalisation

On présente, en relation avec la figure 1a, un exemple de système pour la mise en oeuvre de l'invention, selon un premier mode de réalisation.

On considère un dispositif de transaction 10, par exemple un terminal de paiement électronique, dans lequel un premier utilisateur U1 a inséré une carte électronique 110, pour la réalisation d'une transaction T.

Cet utilisateur U1 est porteur d'un terminal mobile 11, par exemple un téléphone mobile, comprenant une ou plusieurs antennes 111, 112, de transmission.

De plus, le compte bancaire de cet utilisateur U1, et notamment les transactions effectuées via la carte électronique 110, est géré par un organisme bancaire, disposant d'un serveur 13 stockant les informations relatives aux transactions, et apte à générer (seul ou en coopération avec un autre serveur dédié) des relevés 130.

Au moment de la transaction T, un deuxième utilisateur U2, porteur d'un terminal mobile 12, comprenant une ou plusieurs antennes 121, 122, de réception et/ou d'émission, peut se trouver également à proximité du dispositif de transaction 10 (par exemple, dans une file d'attente à une caisse d'un magasin, ou devant un distributeur automatique de billets).

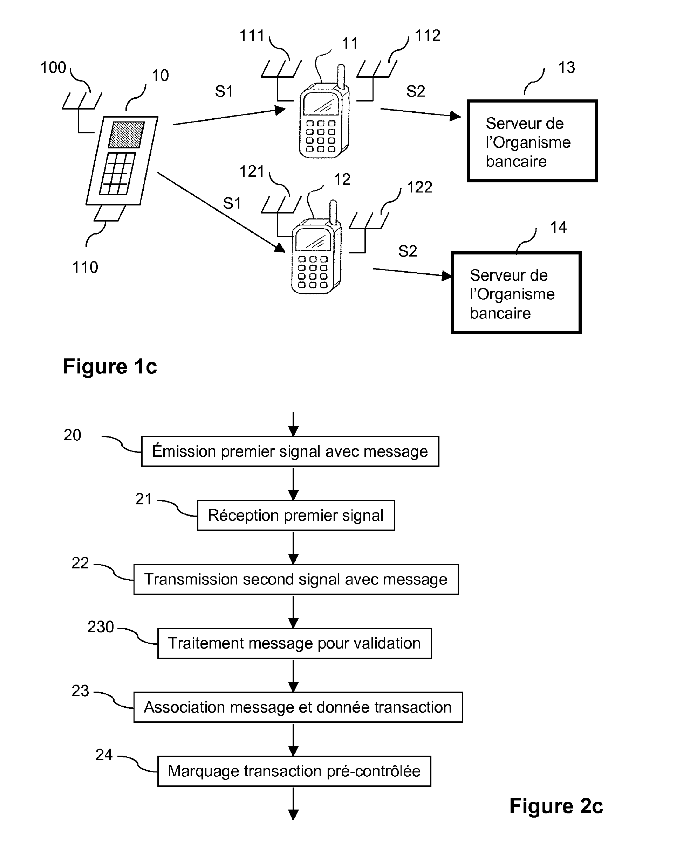

On présente maintenant, en relation avec la figure 2a, les principales étapes du procédé d'aide au contrôle selon un premier mode de réalisation de l'invention, mis en oeuvre dans un système tel que décrit précédemment en relation avec la figure 1a.

Au moment de la transaction T, ou ultérieurement (par exemple en fonction de l'utilisation du dispositif de transaction, ou du trafic de communication), le dispositif de transaction 10 émet, via une antenne 100, lors d'une étape 20, un premier signal S1, comprenant un message relatif à la transaction T. Par exemple, ce message peut correspondre à un reçu, comprenant des informations relatives à la transaction T comme le montant et la date, ainsi que des informations relatives à la carte électronique 110, comme un numéro de compte bancaire ou un autre identifiant bancaire, un identifiant du porteur de la carte U1, etc.

Ces informations peuvent être transmises de manière chiffrée dans le message porté par le signal S1. Cela suppose qu'un échange préalable de clés a eu lieu (afin de pouvoir décrypter ces informations), entre le terminal de transaction et l'organisme bancaire 13, ou bien entre le terminal de transaction et le terminal mobile, de manière classique, non décrite plus en détails ici.

Ce signal peut être émis via différentes technologies de communication, comme par exemple le « Bluetooth », le « Wi-Fi », le « RFID », le « NFC » (« Near Field Communication » en anglais, pour « communication en champ proche »), ou la technologie infrarouge.

Dans l'exemple de la figure 1a, ce signal S1 est diffusé via Bluetooth et reçu, lors d'une étape 21, par les terminaux mobiles 11 et 12, respectivement portés par les utilisateurs U1 et U2.

On considère dans cet exemple que les terminaux mobiles 11 et 12 sont aptes à recevoir, via une première antenne 111 (ou 121), et décoder un tel signal S1, et notamment à reconnaître si le message porté par ce signal est relatif à une carte électronique associée au porteur de ce terminal.

Par exemple, le terminal mobile 11 est apte à décoder le message porté par le signal S1 et à reconnaître que l'identifiant bancaire contenu dans les informations relatives à la carte 110 correspondant à l'identifiant bancaire de l'utilisateur U1. Le terminal mobile 11 peut ainsi valider le message.

De même, le terminal mobile 12 est apte à décoder le message porté par le signal S1 et à reconnaître que l'identifiant bancaire contenu dans les informations relatives à la carte 110 ne correspond pas à l'identifiant bancaire de l'utilisateur U2.

De cette manière, le message porté par le signal S1 n'est pas traité par un terminal mobile ne l'ayant pas validé.

Dans l'exemple de la figure 1a, le terminal mobile 11, ayant validé le message, le transmet à l'organisme bancaire concerné 13, lors d'une étape 22, via un second signal S2 émis par une deuxième antenne 112. Ce second signal peut être un SMS, ou un appel téléphonique, ou encore un email.

L'organisme bancaire, via un serveur bancaire 13, reçoit ce signal S2, en extrait le message et l'associe, lors d'une étape 23, à une ou plusieurs données relatives à la transaction T, reçues classiquement (le dispositif de transaction transmet de façon classique à l'organisme bancaire des données relatives à chaque transaction effectuée et comprenant notamment la date, le montant de la transaction, un ou plusieurs identifiants bancaires du porteur de la carte électronique impliquée dans la transaction, ...).

Lors d'une étape 24, le serveur bancaire effectue un marquage de la transaction T comme transaction pré-contrôlée, de manière à effectuer ultérieurement un traitement différent de cette transaction, notamment au moment de la génération du relevé bancaire correspondant.

### 6.3 Description d'un deuxième mode de réalisation

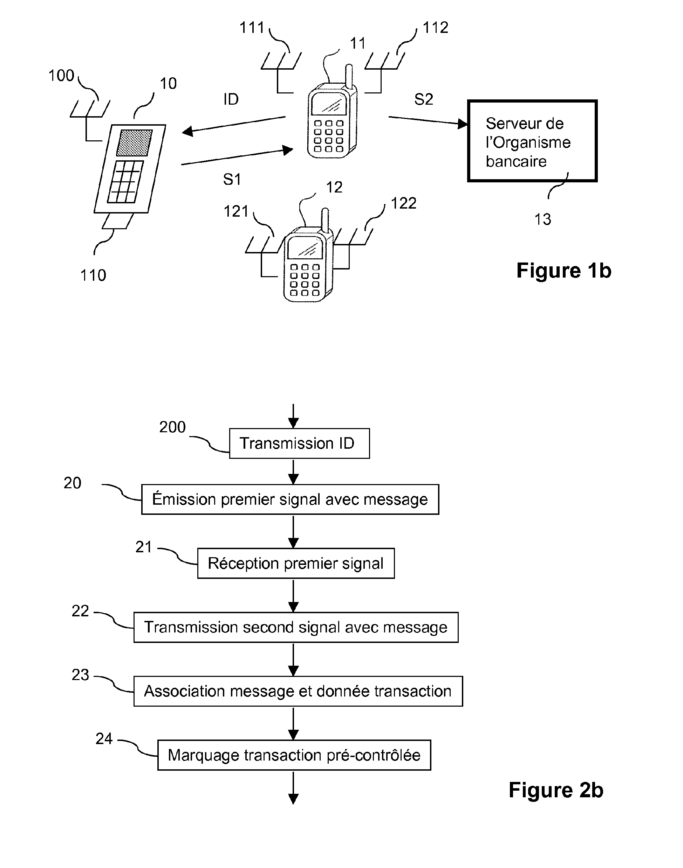

On présente maintenant, en relation avec la figure 2b, les principales étapes du procédé d'aide au contrôle selon un deuxième mode de réalisation de l'invention, mis en oeuvre dans un système tel qu'illustré en figure 1b.

Préalablement à l'étape 20 décrite précédemment, le terminal mobile 11 transmet, lors d'une étape 200, au dispositif de transaction 10, une ou plusieurs informations d'identification ID. Ces informations ID permettent ensuite au dispositif de transaction 10 d'identifier ce terminal mobile 11 comme étant le destinataire du premier signal S1 relatif à la transaction T.

Ainsi, le terminal mobile peut transmettre une information correspondant à son numéro d'appel, et une information d'identification de la carte électronique 110 associée à l'utilisateur U1.

De cette manière, lors de l'étape 20, le dispositif de transaction émet, via une antenne 100, le signal S1 uniquement vers le terminal mobile 11, même si le terminal mobile 12 se trouve à proximité.

Les étapes suivantes du procédé sont identiques à celles décrites précédemment en relation avec les figures 1a et 2a.

Ce mode de réalisation permet d'éviter un traitement particulier du message reçu par le terminal mobile, comme dans l'exemple décrit précédemment. En effet, le terminal mobile s'étant identifié auprès du dispositif de transaction, le message qu'il reçoit lui est destiné, et il peut le retransmettre directement, via un deuxième signal, à l'organisme bancaire en charge de la gestion de la transaction.

### 6.3 Description d'un troisième mode de réalisation

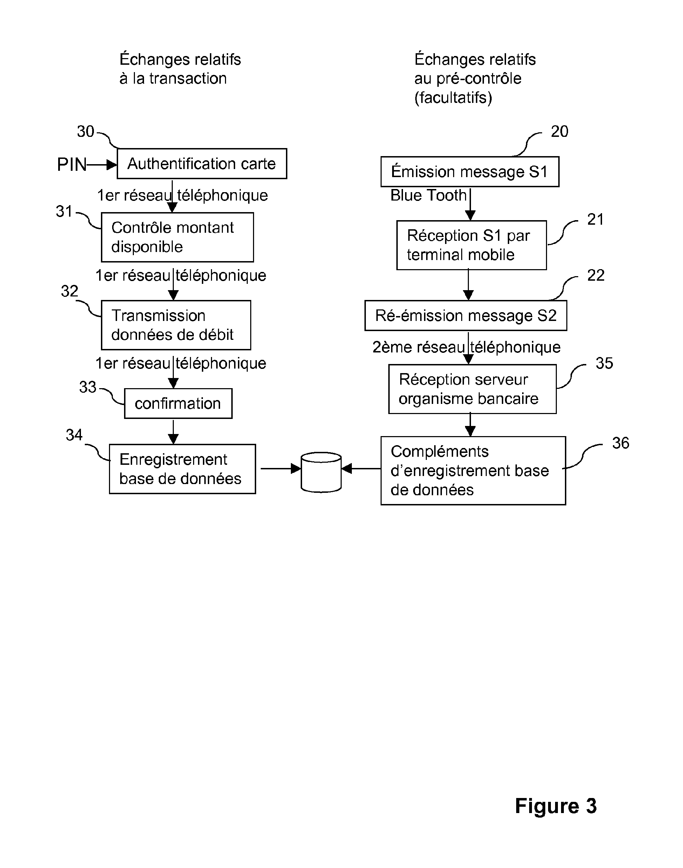

On présente maintenant, en relation avec la figure 3a, les principales étapes du procédé d'aide au contrôle selon un troisième mode de réalisation de l'invention, mis en oeuvre dans un système tel qu'illustré en figure 1c.

Dans cet exemple de réalisation, les étapes 20 et 21 sont identiques à celles du premier mode de réalisation, décrites en relation avec la figure 2a.

Ainsi, les terminaux 11 et 12 reçoivent, via une première antenne 111 (ou 121), le signal S1 émis par le dispositif de transaction 10.

Dans cet exemple, les terminaux 11 et 12 transfèrent, lors d'une étape 22, le message porté par ce signal S1 aux serveurs des organismes bancaires concernés, respectivement 13 et 14, via un deuxième signal S2, émis par chacun des terminaux mobiles 11 et 12, via une deuxième antenne 112 (ou 122).

Contrairement au premier mode de réalisation, les terminaux 11 et 12 ne valident pas au préalable le message porté par le signal S1, et transfèrent directement ce message aux organismes bancaires même si ce message ne les concerne pas. Par exemple, la transaction T implique la carte électronique 110 de l'utilisateur U1, et ne concerne donc a priori pas l'organisme bancaire 14 gérant le compte de l'utilisateur U2.

Lors d'une étape 230, le message porté par le signal S2 et reçu par les organismes bancaires 13 et 14, est traité par chacun de ces organismes, de façon à déterminer si ce message les concerne ou non.

Ainsi, les informations transmises dans ce message, et relatives à la transaction T et à la carte électronique 110, sont comparées par chacun des organismes bancaires 13 et 14 avec des informations concernant les comptes bancaires dont ils ont la gestion, pour valider ou non le message.

Dans l'exemple de la figure 3a, l'organisme bancaire 13 reconnaît, dans les informations d'identification de compte du message, des informations correspondant à un compte dont il a la gestion, en l'occurrence celui de l'utilisateur U1. Il met donc en oeuvre les étapes suivantes 23 et 24 du procédé, telles que décrites précédemment en relation avec la figure 2a.

L'organisme bancaire 14 quant à lui ne reconnaît pas les informations d'identification de compte comprises dans le message et ne le traite pas.

### 6.3 Description d'un exemple de mise en oeuvre

On présente maintenant, en relation avec la figure 3, les principaux échanges relatifs à une transaction ainsi que les principaux échanges relatifs au pré-contrôle de cette transaction, selon un mode de réalisation particulier de l'invention.

Les échanges relatifs à la transaction sont classiquement les suivants :
- une étape 30 d'authentification de la carte 110 impliquée dans la transaction, à l'aide d'un code personnel d'identification PIN fourni par le porteur de la carte. Les informations concernant la carte et le code d'identification sont transmises via un premier réseau téléphonique au serveur de l'organisme bancaire 13 ;
- une étape 31 de vérification, par l'organisme bancaire 13, des conditions de réalisation de la transaction, à savoir par exemple le montant disponible sur le compte du client identifié au préalable. Le résultat de la vérification est transmis au dispositif de transaction 10, via le premier réseau téléphonique ;
- une étape 32 de transmission des données de débit, par le dispositif de transaction 10 au serveur de l'organisme bancaire 13, toujours via le premier réseau téléphonique ;
- une étape 33 de confirmation de la transaction ;
- une étape 34 d'enregistrement des données relatives à la transmission, dans une base de données du serveur bancaire 13.

L'invention prévoit quant à elle, selon différents modes de réalisation, d'enrichir les données classiques relatives à la transaction enregistrées lors de l'étape 34, en mettant en oeuvre des échanges supplémentaires, et facultatifs.

Ces échanges sont les suivants, selon un mode de réalisation particulier de l'invention :
- une étape 20 d'émission d'un premier message S1, par exemple via Blue Tooth, par le terminal de transaction 10, à destination d'un terminal mobile 11;
- une étape 21 de réception du message S1 par un terminal mobile 11, via une première antenne 111 ;
- une étape 22 d'émission, par le terminal mobile 11, d'un message S2 (ou ré-émission du message S1 reçu), via une antenne 112 et un deuxième réseau téléphonique ;
- une étape 35 de réception, par l'organisme bancaire 13, du message S2 ;
- une étape 36 de génération et d'enregistrement dans une base de données, par le serveur de l'organisme bancaire 13, d'informations complémentaires, ou de compléments, relatives au pré-contrôle de la transaction.

## Revendications

1. Procédé d'aide au contrôle de l'exactitude d'enregistrements de transactions bancaires éditées dans un relevé bancaire et effectuées par l'intermédiaire d'au moins un dispositif de transaction,
**caractérisé en ce qu'**il comprend, pour au moins une desdites transactions, les étapes suivantes :
- émission, par ledit dispositif de transaction, d'au moins un premier signal comprenant un message relatif à ladite transaction ;
- réception, par au moins un terminal mobile, dudit au moins un premier signal ;
- transmission, par ledit terminal mobile, d'un second signal comprenant au moins ledit message, vers au moins un organisme bancaire ;
- association, par un serveur de l'organisme bancaire en charge de la transaction, dudit message à au moins une donnée relative à ladite transaction, et marquage de ladite transaction comme transaction pré-contrôlée.

2. Procédé d'aide au contrôle selon la revendication 1, **caractérisé en ce qu'**il comprend une étape de génération d'un relevé bancaire par un serveur dudit organisme bancaire, mettant en oeuvre un traitement différent pour les transactions marquées pré-contrôlées et pour les transactions non marquées.

3. Procédé d'aide au contrôle selon l'une quelconque des revendications 1 et 2, **caractérisé en ce que** ledit message relatif à ladite transaction comprend des informations chiffrées relatives à ladite transaction et/ou à une carte électronique utilisée pour ladite transaction.

4. Procédé d'aide au contrôle selon l'une quelconque des revendications 1 à 3, **caractérisé en ce que** ledit premier signal est transmis selon une technique de communication appartenant au groupe comprenant :
- la technologie « Bluetooth » ;
- la technologie « Wi-Fi » ;
- la technologie « RFID » ;
- la technologie « NFC » (« Near Field Communication » en anglais, pour « communication en champ proche ») ;
- la technologie infrarouge.

5. Procédé d'aide au contrôle selon l'une quelconque des revendications 1 à 4, **caractérisé en ce que** ledit premier signal est émis vers tous les terminaux mobiles voisins dudit dispositif de transaction.

6. Procédé d'aide au contrôle selon la revendication 5, **caractérisé en ce que** ladite étape de transmission d'un second signal, vers au moins un organisme bancaire, est mise en oeuvre par chacun desdits terminaux mobiles ayant reçu ledit premier signal.

7. Procédé d'aide au contrôle selon la revendication 5, **caractérisé en ce qu'**il comprend, pour chacun des terminaux mobiles ayant reçu ledit premier signal, une étape de validation dudit message relatif à ladite transaction,
et **en ce que** ladite étape de transmission d'un second signal, vers au moins un organisme bancaire, est mise en oeuvre seulement par un terminal mobile ayant validé ledit message.

8. Procédé d'aide au contrôle selon l'une quelconque des revendications 1 à 4, **caractérisé en ce qu'**il comprend une étape préalable d'émission, par un terminal mobile associé à une carte électronique utilisée pour ladite transaction, d'au moins une information d'identification, vers ledit dispositif de transaction, et **en ce que** ledit premier signal est émis seulement vers ledit terminal mobile.

9. Dispositif de transaction apte à réaliser une transaction bancaire,
**caractérisé en ce qu'**il comprend des moyens d'émission d'un signal comprenant un message relatif à ladite transaction vers au moins un terminal mobile voisin.

10. Dispositif de transaction selon la revendication 9, **caractérisé en ce qu'**il comprend des moyens de réception d'au moins une information d'identification en provenance d'au moins un terminal mobile voisin.

11. Serveur bancaire, **caractérisé en ce qu'**il comprend :
- des moyens de réception d'un signal comprenant au moins un message relatif à une transaction ;
- des moyens de traitement dudit message ;
- des moyens d'association dudit message à au moins une donnée relative à une transaction, et des moyens de marquage de ladite transaction comme transaction pré-contrôlée ;
- des moyens de génération d'au moins un relevé bancaire mettant en oeuvre un traitement différent pour les transactions marquées pré-contrôlées et pour les transactions non marquées.

12. Terminal mobile, **caractérisé en ce qu'**il comprend :
- des moyens de réception d'au moins un premier signal comprenant un message relatif à une transaction, émis par un dispositif de transaction traitant ladite transaction ;
- des moyens de transmission, d'un second signal comprenant au moins ledit message, vers au moins un organisme bancaire ;
de façon à permettre l'association, par un serveur de l'organisme bancaire en charge de la transaction, dudit message à au moins une donnée relative à ladite transaction, et marquage de ladite transaction comme transaction pré-contrôlée.

13. Terminal mobile selon la revendication 12, **caractérisé en ce qu'**il comprend des moyens de validation d'un message relatif à une transaction porté par ledit signal, lesdits moyens de validation étant mis en oeuvre préalablement auxdits moyens de transmission, d'un second signal comprenant au moins ledit message, vers au moins un organisme bancaire.

14. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé d'aide au contrôle selon l'une au moins des revendications 1 à 8, lorsqu'il est exécuté sur un dispositif de transaction.

15. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé d'aide au contrôle selon l'une au moins des revendications 1 à 8, lorsqu'il est exécuté sur un terminal mobile.

16. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé d'aide au contrôle selon l'une au moins des revendications 1 à 8, lorsqu'il est exécuté sur un serveur bancaire.

17. Signal représentatif d'un relevé émis par un serveur bancaire, comprenant au moins un indicateur permettant de distinguer les transactions marquées pré-contrôlées selon le procédé d'aide au contrôle des revendications 1 à 8 et les transactions non marquées.
